# EUROPÄISCHE PATENTSCHRIFT

(11) **EP 1 288 042 B1**
(45) Veröffentlichungstag und Bekanntmachung des Hinweises auf die Patenterteilung: **11.08.2004**
(21) Anmeldenummer: 02013115.7
(22) Anmeldetag: 14.06.2002
(51) Int. Cl.: B60J 7/04, B60J 7/047

(54) **Öffnungsfähiges Fahrzeugdach mit einem vorderen und einem hinteren Schliesselement**
Openable vehicle roof with a movable front and rear closing element
Toit ouvrant avec élément de fermeture avant et arrière pour véhicules automobiles

(30) Priorität: 26.06.2001 DE 10130267
(43) Veröffentlichungstag der Anmeldung: 05.03.2003
(73) Patentinhaber: Webasto Vehicle Systems International GmbH, 82131 Stockdorf (DE)
(72) Erfinder: Schätzler, Walter, 82319 Starnberg (DE); Pfalzgraf, Manfred, 82211 Herrsching (DE)
(74) Vertreter: Konnerth, Dieter Hans

(56) Entgegenhaltungen:
- US-A- 5 951 100
- US-A- 6 129 413

## Beschreibung

Die vorliegende Erfindung betrifft ein öffnungsfähiges Fahrzeugdach mit einem vorderen und einem hinteren Schließelement gemäß dem Oberbegriff von Anspruch 1.

Ein solches gattungsgemäßes Fahrzeugdach ist beispielsweise aus der DE 43 35 653 A1 bekannt, welches als Schiebedach ausgebildet ist, bei welchem ein aus Sichtglas gefertigter Deckel unter eine karosseriefest angebrachte Sichtglasscheibe, welche in diesem Bereich die Außenhaut des Daches bildet, nach hinten geschoben werden kann, um eine Dachöffnung freizugeben. Die beiden Glaselemente können dabei als mehrschichtiges Sonnenschutzglas oder als phototropes Glas ausgebildet sein. Um einen zusätzlichen Sonnenschutz zu realisieren und/oder um den Innenraum abzudunkeln, kann im Innenraum des Fahrzeugs eine Jalousie unterhalb der Glaselemente vorgesehen sein.

Nachteilig bei einer solchen Konstruktion ist, dass der Deckel, wenn er nach hinten unter das feststehende Glaselement geschoben wird, ungeschützt auf einen Fondpassagier zufährt, woraus sich eine Einklemmgefahr von Gegenständen oder Körperteilen in der seitlich angeordneten Verstellmechanik bzw. Führungsschiene für den Deckel und im Bereich der Deckelhinterkante bzw. einer dort vorgesehenen Wasserrinne ergibt, oder dass vorstehende Kanten wie die Dekkelhinterkante Verletzungen bei einem Crash verursachen können.

Ein weiterer Nachteil ist, dass der Sonnenschutz bei einer herkömmlichen Lösung mit Schiebeteilen entweder das vordere oder das hintere Dachteil zumindest teilweise verschließt bzw. abdunkelt. Wenn statt dessen ein oder mehrere Rollos verwendet werden, ist jedoch größerer Bauraum erforderlich. Weiterhin ist nachteilig, dass die Rollos in Querrichtung gerade sind und somit der gewölbten Dachkontur nicht folgen können, und dass bei einer elektrischen Variante elektrische Antriebe untergebracht werden müssen.

Aus der DE 1 141 901 ist ein Schiebedach bekannt, bei welchem ein über eine feste Dachhaut nach hinten schiebbarer Deckel sowie zwei nebeneinander angeordnete durchsichtige Schiebeplatten vorgesehen sind, die aus einer Ruheposition, in welcher sie sich zwischen der hinteren festen Dachhaut und einer darunter angeordneten Stoffbespannung befinden, nach vorne schiebbar sind, um bei geöffnetem Deckel die entstandene Dachöffnung in transparenter Weise zu verschließen.

In der älteren deutschen Patentanmeldung 101 14 497.0 ist ein Fahrzeugdach mit einem öffnungsfähigen transparenten Deckel beschrieben, der eine obere transparente Scheibe und eine darunter angeordnete untere transparente Scheibe aufweist, wobei die obere Scheibe oder die untere Scheibe mit einer als Beschichtung oder aufgeklebte Folie ausgebildeten Schicht aus elektrochromem oder Flüssigkristall-Material versehen ist, deren Transmission bzw. Durchsichtigkeit durch Anlegen einer Spannung einstellbar ist. Ferner ist eine beispielsweise zylindrische Beleuchtungseinrichtung vorgesehen, die seitlich zwischen den beiden Glasscheiben oder an den Seitenkanten der unteren Glasscheibe angeordnet ist, um Licht in die untere Scheibe einzukoppeln und diese als Lichtquelle zu nutzen.

Es ist Aufgabe der vorliegenden Erfindung, ein öffnungsfähiges Fahrzeugdach mit zwei hintereinander angeordneten Schließelementen zu schaffen, bei welchem das vordere Schließelement unter das hintere Schließelement nach hinten schiebbar ist und dennoch ein Schutz vor dem Einklemmen von Gegenständen und Körperteilen im Bereich des hinteren Schließelements realisiert ist, ohne jedoch die durch eine mindestens teilweise Transparenz des vorderen und des hinteren Schließelements erzielte optische Wirkung wesentlich zu beeinträchtigen.

Die Aufgabe wird erfindungsgemäß durch ein Fahrzeugdach mit den Merkmalen des Anspruchs 1 gelöst. Bei dieser Lösung ist vorteilhaft, dass durch das mindestens teilweise transparente Festelement unterhalb des hinteren Schließelements einerseits der Bereich des vorderen Schließelements, wenn dieses nach hinten unter das hintere Schließelement geschoben wird, verdeckt wird und somit ein Einklemmschutz realisiert ist, und andererseits durch die Transparenz des Festelements der durch den Lichteinfall durch das vordere und das hintere Schließelement erzielte optische Eindruck nicht wesentlich beeinträchtigt wird.

Bevorzugte Ausgestaltungen der Erfindung ergeben sich aus den Unteransprüchen.

Vorzugsweise ist das vordere Schließelement ein Glas- oder Kunststoffdeckel. Des weiteren kann das vordere Schließelement als Deckel eines Schiebedaches oder eines Schiebehebedaches ausgebildet sein.

Das hintere Schließelement kann ebenfalls ein Glas- oder Kunststoffdeckel sein und es kann feststehend ausgebildet sein, vorzugsweise ist es jedoch ein mit seiner Hinterkante in eine Lüftungsposition ausstellbarer Deckel, so daß eine Beund Entlüftung des Fahrzeugs unterstützt werden kann.

In bevorzugter Ausgestaltung enthält das Festelement eine Schicht, deren Transmission vom Fahrzeugnutzer einstellbar ist. Die Schicht ist z. B. als LCD-, EC- oder SPD-Beschichtung ausgebildet. Andererseits kann die Schicht als auf das Festelement aufgeklebte LCD-, EC- oder SPD-Folie ausgebildet sein. Zweckmäßigerweise ist das Festelement als Glas- oder Kunststoffplatte ausgebildet.

Nachfolgend wird die Erfindung anhand der beigefügten Zeichnungen beispielhaft näher erläutert. Dabei zeigen:
- Fig. 1: schematisch einen Längsschnitt durch ein erfindungsgemäßes Fahrzeugdach mit einem vorderen und einem hinteren Schließelement in Schließstellung;
- Fig. 2: eine Ansicht wie Fig. 1, wobei jedoch das vordere Schließelement in einer nach hinten unter das hintere Schließelement geschobenen Stellung gezeigt ist; und
- Fig. 3: einen Schnitt in Fahrzeugquerrichtung im seitlichen Randbereich des hinteren Schließelements, wobei sich das vordere Schließelement in der Stellung von Fig. 2 befindet.

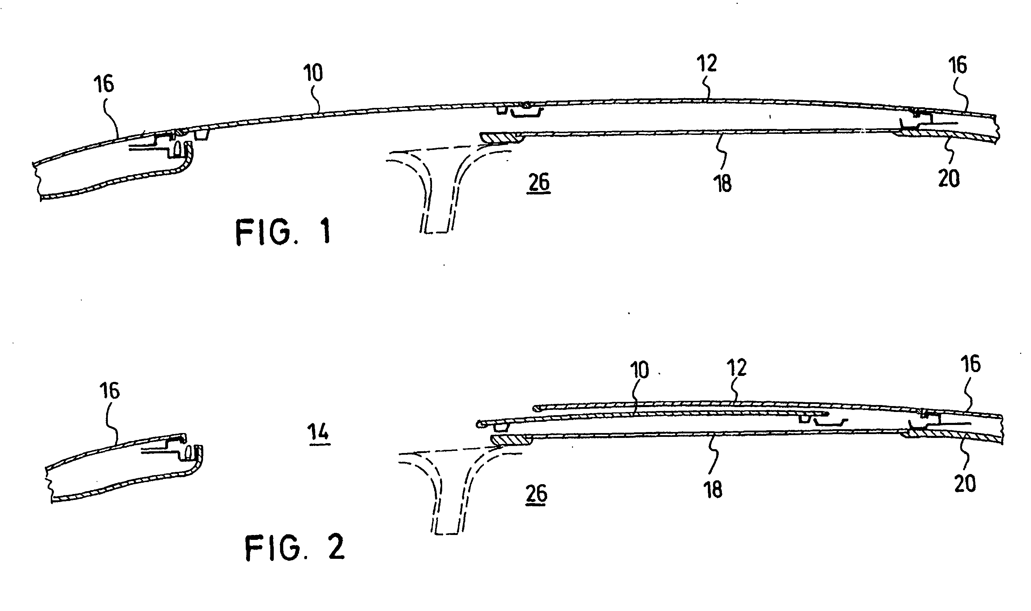

Gemäß Fig. 1 umfasst ein erfindungsgemäßes Fahrzeugdach ein vorderes Schließelement 10, welches in Schließstellung dargestellt ist, und ein dahinter liegend angeordnetes hinteres Schließelement 12, welche im dargestellten Zustand gemeinsam eine Dachöffnung 14 in einer festen Dachfläche 16 verschließen. Bei dem vorderen Schließelement handelt es sich gemäß Fig. 1 um einen Deckel aus lichtdurchlässigem Material, vorzugsweise Glas oder Kunststoff, der mittels einer an sich bekannten und nicht dargestellten Verstellmechanik eine reine Schiebedachfunktion oder auch eine Schiebehebedachfunktion erfüllen kann. In beiden Fällen ist die Verstellmechanik so ausgebildet, dass der vordere Deckel 10 mittels eines an sich bekannten und nicht dargestellten Antriebs nach hinten unter das hintere Schließelement 12 schiebbar ist, um die Dachöffnung 14 zumindest im vorderen Bereich freizulegen.

Das hintere Schließelement 12 ist gemäß Fig. 1 ebenfalls als Deckel aus transparentem Material, vorzugsweise Glas oder Kunststoff, ausgebildet, wobei der hintere Deckel 12 feststehend, d.h. nicht verstellbar, oder mit seiner Hinterkante in eine Lüftungsposition ausstellbar gebildet sein kann.

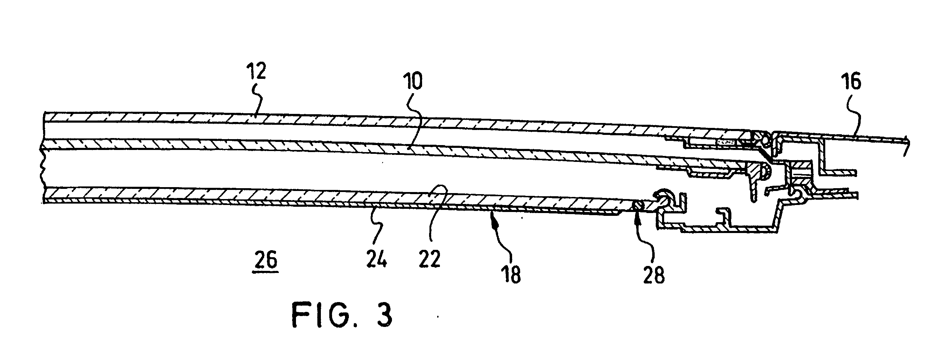

Unterhalb des hinteren Deckels 12 ist ein lichtdurchlässiges Festelement 18 vorgesehen, welches fahrzeugfest montiert ist und vorzugsweise als Glas- oder Kunststoffplatte ausgebildet ist. Hinter dem Festelement 18 schließt sich ein Festhimmel 20 an. Das Festelement 18 umfasst gemäß Fig. 3 die Glas- oder Kunststoffplatte 22 sowie eine an der Oberseite oder, wie in Fig. 3 gezeigt, an der Unterseite der Platte 22 angebrachte Schicht 24, deren Transmission über eine angelegte Spannung vom Fahrzeugnutzer einstellbar ist. Die Schicht 24 kann dabei beispielsweise als Flüssigkristall-(LCD)-Beschichtung, SPD-(suspended particle device)-Beschichtung oder als elektrochrome (EC) Beschichtung auf die Platte 22 oder als entsprechende aufgeklebte Folie ausgebildet sein. Beispiele für die Ausgestaltung der Schicht 24 mit einstellbarer Transmission sind beispielsweise in der DE 196 30 812 A1 bzw. der DE 42 34 981 A1 beschrieben. Die Schicht 24 dient dazu, unerwünscht starken Lichteinfall in den Fahrzeuginnenraum 26 durch den transparenten hinteren Deckel 12 und die transparente Scheibe oder Platte 22 hindurch mittels einer entsprechenden Steuerung der Transmission der Schicht 24 zu verhindern. Auf diese Weise kann eine Abdunklung bzw. ein Sonnenschutz ohne zusätzliche und insbesondere bewegliche Teile, wie beispielsweise einem Rollo oder einem Schiebehimmel, erzielt werden.

Wie in Fig. 3 gezeigt ist, ist im seitlichen Randbereich des Festelements 18 eine Beleuchtungseinrichtung 28 vorgesehen, welche sich in Dachlängsrichtung in zylindrischer Form erstreckt, um Licht über die seitliche Kante der Platte 22 in die Platte 22 einzukoppeln. Die Platte 22 ist vorzugsweise so ausgebildet, dass sie eine Vielzahl von innerhalb der Platte 22 gebildeten Reflexionsflächen aufweist, welche das eingekoppelte Licht nach unten zum Fahrzeuginnenraum 26 hin reflektieren, um das Festelement 18 als Lichtquelle für den Fahrzeuginnenraum 26 nutzen zu können. Eine geeignete Ausgestaltung der Scheibe oder Platte 22 des Festelements 18 ist in der US 5 079 675 beschrieben. Details bezüglich der Ausgestaltung der Beleuchtungseinrichtung 28 und deren Anordnung bezüglich des Festelements 18 sind in der oben erwähnten älteren deutschen Patentanmeldung Nr. 101 14 497.0 beschrieben. Insbesondere kann die Beleuchtungseinrichtung 28 so ausgebildet sein, dass sie eine wahlweise Beleuchtung in mindestens zwei unterschiedlichen Farben erlaubt und die Lichtintensität einstellbar ist. Insbesondere kann die Beleuchtungseinrichtung 28 von Leuchtdioden oder von einer Leuchtstoffröhre bzw. Entladungsröhre gebildet sein.

Durch das Vorsehen der Beleuchtungseinrichtung 28 kann ohne besonderen zusätzlichen Aufwand mittels des Festelements 18 eine angenehme und komfortable zusätzliche Lichtquelle für den Fahrzeuginnenraum geschaffen werden.

In Fig. 2 und 3 ist eine Stellung des vorderen Deckels 10 dargestellt, in welcher dieser nach hinten zwischen den hinteren Deckel 12 und das Festelement 18 geschoben ist. Bei dieser Öffnungsbewegung des vorderen Deckels 10 nach hinten wirkt das Festelement 18 als Schutz für einen Fondpassagier bezüglich des vorderen Deckels 10, wobei insbesondere ein Einklemmschutz im Bereich der seitlich unterhalb des hinteren Deckels 12 angeordneten Verstell- und Führungsmechanik für den vorderen Deckel 10 sowie ein Einklemmschutz im Bereich der Hinterkante des vorderen Deckels 10 bzw. im Bereich einer dort vorgesehenen Wasserrinne (nicht gezeigt) realisiert werden kann.

Durch die geschilderte Ausgestaltung des Festelements 18 kann auf einfache Weise ein Einklemmschutz ohne wesentliche Beeinträchtigung des durch die transparente Ausgestaltung des vorderen Deckels 10 und des hinteren Deckels 12 erzielten optischen Eindrucks erreicht werden, wobei gleichzeitig das Festelement 18 mittels seiner Abdunklungsfunktion und seiner Beleuchtungsfunktion als komfortsteigerndes Element für die Fahrzeuginsassen wirkt.

Vorzugsweise ist das Festelement 18 mit Lüftungsöffnungen (nicht gezeigt) versehen, um einen Luftaustausch zwischen dem Fahrzeuginnenraum 26 und dem oberhalb des Festelements 18 gelegenen Raum zu ermöglichen, was vor allem bei ausgestelltem vorderen bzw. ausgestelltem hinteren Deckel 10 bzw. 12 vorteilhaft ist.

### Bezugszeichenliste

- 10: vorderer Deckel
- 12: hinterer Deckel
- 14: Dachöffnung
- 16: feste Dachfläche
- 18: Festelement
- 20: Festhimmel
- 22: Platte von 18
- 24: Schicht auf 22
- 26: Fahrzeuginnenraum
- 28: Beleuchtungseinrichtung

## Patentansprüche

1. Öffnungsfähiges Fahrzeugdach mit einem mindestens zum Teil transparenten vorderen Schließelement (10) und einem in Fahrtrichtung dahinter liegenden, mindestens zum Teil transparenten hinteren Schließelement (12) zum Verschließen einer Dachöffnung (14), wobei das vordere Schließ element (10) nach hinten unter das hintere Schließelement (12) schiebbar ist, um die Dachöffnung (14) mindestens teilweise freizulegen,
**dadurch gekennzeichnet,**
**dass** unterhalb des hinteren Schließelements (12) ein mindestens zum Teil transparentes Festelement (18) angeordnet ist und
**dass** das vordere Schließelement (10) in seiner nach hinten unter das hintere Schließelement (12) geschobenen Stellung zwischen dem Festelement (18) und dem hinteren Schließelement (12) liegt.

2. Fahrzeugdach nach Anspruch 1,
**dadurch gekennzeichnet, dass** das hintere Schließelement (12), das insbesondere ein Glas- oder Kunststoffdeckel ist, feststehend ausgebildet ist.

3. Fahrzeugdach nach Anspruch 1 oder 2,
**dadurch gekennzeichnet, dass** das hintere Schließelement (12) ein mit seiner Hinterkante in eine Lüftungsposition ausstellbarer Deckel (12) ist.

4. Fahrzeugdach nach einem der vorhergehenden Ansprüche,
**dadurch gekennzeichnet, dass** das Festelement (18) eine Schicht (24) aufweist, deren Transmission vom Fahrzeugnutzer einstellbar ist.

5. Fahrzeugdach nach Anspruch 4,
**dadurch gekennzeichnet, dass** die Schicht (24) als LCD-, EC- oder SPD-Beschichtung oder als aufgeklebte LCD-, EC- oder SPD-Folie ausgebildet ist.

6. Fahrzeugdach nach einem der vorhergehenden Ansprüche,
**dadurch gekennzeichnet, dass** das Festelement (18) als Glas- oder Kunststoffplatte (22) ausgebildet ist.

7. Fahrzeugdach nach einem der vorhergehenden Ansprüche,
**dadurch gekennzeichnet, dass** eine Beleuchtungseinrichtung (28) zur Beleuchtung des Festelements (18) vorgesehen ist, um das Festelement (18) wahlweise als Lichtquelle für den Fahrzeuginnenraum (26) zu nutzen.

8. Fahrzeugdach nach Anspruch 7,
**dadurch gekennzeichnet, dass** die Beleuchtungseinrichtung (28) nahe des hinteren und/oder eines seitlichen Endes des Festelements (18) vorgesehen ist, um Beleuchtungslicht über die Hinterkante bzw. die Seitenkante des Festelements (18) in das Festelement (18) einzukoppeln.

9. Fahrzeugdach nach Anspruch 8,
**dadurch gekennzeichnet, dass** die Beleuchtungseinrichtung (28) zylindrisch oder sphärisch ausgebildet ist.

10. Fahrzeugdach nach einem der Ansprüche 7 bis 9,
**dadurch gekennzeichnet, dass** die Beleuchtungseinrichtung (28) Leuchtdioden oder eine Leuchtstoffröhre umfasst.

11. Fahrzeugdach nach einem der vorhergehenden Ansprüche,
**dadurch gekennzeichnet, dass** das Festelement (18) mit Lüftungsöffnungen versehen ist, um einen Luftaustausch zwischen dem Fahrzeuginnenraum (26) und dem oberhalb des Festelements (18) gelegenen Raum bei geöffnetem vorderen Schließelement (10) und/oder geöffnetem hinteren Schließelement (12) zu ermöglichen.

## Claims

1. Openable vehicle roof with an at least partly transparent front closing element (10) and an at least partly transparent rear closing element (12) located behind the former in the direction of travel for closing a roof opening (14), it being possible for the front closing element (10) to be slid rearwards under the rear closing element (12) in order at least partly to open the roof opening (14),
**characterized**
**in that** underneath the rear closing element (12) there is arranged an at least partly transparent fixed element (18) and
**in that**, in its position slid rearwards under the rear closing element (12), the front closing element (10) is located between the fixed element (18) and the rear closing element (12).

2. Vehicle roof according to Claim 1, **characterized in that** the rear closing element (12), which is in particular a glass or plastic cover, is designed to be stationary.

3. Vehicle roof according to Claim 1 or 2, **characterized in that** the rear closing element (12) is a cover (12) which can be raised with its rear edge into a ventilation position.

4. Vehicle roof according to one of the preceding claims, **characterized in that** the fixed element (18) has a layer (24) whose transmission can be adjusted by the vehicle user.

5. Vehicle roof according to Claim 4, **characterized in that** the layer (24) is formed as an LCD, EC or SPD coating or as an LCD, EC or SPD film adhesively bonded on.

6. Vehicle roof according to one of the preceding claims, **characterized in that** the fixed element (18) is formed as a glass or plastic panel (22).

7. Vehicle roof according to one of the preceding claims, **characterized in that** an illuminating device (28) for illuminating the fixed element (18) is provided, in order to use the fixed element (18) optionally as a light source for the vehicle interior (26).

8. Vehicle roof according to Claim 7, **characterized in that** the illuminating device (28) is provided close to the rear and/or a lateral end of the fixed element (18) in order to inject illuminating light into the fixed element (18) via the rear edge or the side edge of the fixed element (18).

9. Vehicle roof according to Claim 8, **characterized in that** the illuminating device (28) is cylindrical or spherical.

10. Vehicle roof according to one of Claims 7 to 9, **characterized in that** the illuminating device (28) comprises light-emitting diodes or a fluorescent tube.

11. Vehicle roof according to one of the preceding claims, **characterized in that** the fixed element (18) is provided with ventilation openings in order to permit an exchange of air between the vehicle interior (26) and the space above the fixed element (18) when the front closing element (10) is open and/or the rear closing element (12) is open.

## Revendications

1. Toit ouvrant pour véhicules, avec un élément de fermeture avant (10) transparent au moins en partie, et un élément de fermeture arrière (12) transparent au moins en partie, placé derrière lui dans la direction de roulage, pour fermer une ouverture de toit (14), l'élément de fermeture avant (10) étant susceptible de coulisser vers l'arrière, au-dessous de l'élément de fermeture arrière (12), pour dégager au moins partiellement l'ouverture de toit (14),
**caractérisé en ce qu'**
au-dessous de l'élément de fermeture arrière (12) est disposé un élément fixe (18), au moins partiellement transparent, et **en ce que** l'élément de fermeture avant (10), à sa position poussée vers l'arrière, au-dessous de l'élément de fermeture arrière (12), est situé entre l'élément fixe (18) et l'élément de fermeture arrière (12).

2. Toit de véhicule selon la revendication 1,
**caractérisé en ce que** l'élément de fermeture arrière (12), qui est en particulier un couvercle en verre ou en matière synthétique, est réalisé de façon à être stationnaire.

3. Toit de véhicule selon la revendication 1 ou 2,
**caractérisé en ce que** l'élément de fermeture arrière (12) est un couvercle (12), pouvant être entrouvert en une position d'aération, par son bord arrière.

4. Toit de véhicule selon l'une des revendications précédentes,
**caractérisé en ce que** l'élément fixe (18) présente une couche (24), dont la caractéristique de transmission peut être réglée par l'utilisateur du véhicule.

5. Toit de véhicule selon la revendication 4,
**caractérisé en ce que** la couche (24) est réalisée sous la forme de revêtement en LCD, EC ou SPD, ou bien sous forme de feuil en LCD, EC ou SPD, rapporté par collage.

6. Toit de véhicule selon l'une des revendications précédentes,
**caractérisé en ce que** l'élément fixe (18) est réalisé sous la forme de panneau de verre ou de matière synthétique (22).

7. Toit de véhicule selon l'une des revendications précédentes,
**caractérisé en ce qu'**un dispositif d'éclairement (28), devant éclairer l'élément fixe (18), est prévu pour utiliser l'élément fixe (18), au choix, en tant que source de lumière pour l'habitacle de véhicule (26).

8. Toit de véhicule selon la revendication 7,
**caractérisé en ce que** le dispositif d'éclairement (28) est prévu à proximité de l'extrémité arrière et/ou d'une extrémité latérale de l'élément fixe (18), pour introduire la lumière d'éclairement dans l'élément fixe (18), en passant par le bord arrière ou le bord latéral de l'élément fixe (18).

9. Toit de véhicule selon la revendication 8,
**caractérisé en ce que** le dispositif d'éclairement (28) est cylindrique ou sphérique.

10. Toit de véhicule selon l'une des revendications 7 à 9,
**caractérisé en ce que** le dispositif d'éclairement (28) comprend des diodes luminescentes ou un tube luminescent.

11. Toit de véhicule selon l'une des revendications précédentes,
**caractérisé en ce que** l'élément fixe (18) est muni d'ouvertures d'aération, pour permettre un échange d'air entre l'habitacle de véhicule (26) et l'espace situé au-dessus de l'élément fixe (18), alors que l'élément de fermeture avant (10) est ouvert et/ou que l'élément de fermeture arrière (12) est ouvert.
